# EUROPÄISCHE PATENTSCHRIFT

(11) **EP 3 990 800 B1**
(45) Veröffentlichungstag und Bekanntmachung des Hinweises auf die Patenterteilung: **14.06.2023**
(21) Anmeldenummer: 20735319.4
(22) Anmeldetag: 25.06.2020
(51) Int. Cl.: F16D 55/36

(54) **LAMELLENBREMSE FÜR EIN DREHBARES ELEMENT**
MULTIPLE DISK BRAKE FOR A ROTATABLE ELEMENT
FREIN À DISQUES POUR ÉLÉMENT TOURNANT

(30) Priorität: 28.06.2019 DE 102019209529
(43) Veröffentlichungstag der Anmeldung: 04.05.2022
(73) Patentinhaber: Continental Automotive Technologies GmbH, 30165 Hannover (DE)
(72) Erfinder: BACH, Uwe, 60488 Frankfurt am Main (DE); SCHULITZ, Matthias, 60488 Frankfurt am Main (DE); STAHL, Thomas, 60488 Frankfurt am Main (DE); LOHFINK, Phil, 60488 Frankfurt am Main (DE); GÄDKE, Martin, 60488 Frankfurt am Main (DE); MESSNER, Adrian, 60488 Frankfurt am Main (DE); SEFO, Ahmed, 60488 Frankfurt am Main (DE); HOFFMANN, Jens, 60488 Frankfurt am Main (DE)
(74) Vertreter: Continental Corporation
(86) Internationale Anmeldenummer: PCT/EP2020/067941
(87) Internationale Veröffentlichungsnummer: WO 2020/260528

(56) Entgegenhaltungen:
- EP-A1- 1 695 883
- EP-A1- 3 418 135
- CA-A1- 2 276 514
- DE-T2- 60 123 010
- US-A- 6 145 635

## Beschreibung

Die Erfindung betrifft eine Lamellenbremse für ein drehbares Element.

Beispielsweise aus dem Stand der Technik "Bremsenhandbuch", ISBN 10 3-8348-0064-3, 3. Aufl. 2006, Kapitel 12.3.3, sind ölbadplatzierte, nasslaufende, Vollscheibenbremsen in Lamellengestaltung in wartungsfreier Lebensdauerkonfiguration bekannt, die als Schwerlast-Betriebsbremse oder Feststell- und Hilfsbremse für schwere Nutzfahrzeuge, wie insbesondere landwirtschaftliche Traktoren, Erntemaschinen, Forstmaschinen und Baumaschinen also für Off-Road-Betrieb geeignet sind. Bei derartigen Nutzfahrzeugen haben sich Luftdruck-Bremsvorrichtungen weitgehend durchgesetzt und deren Feststellbremse ist zumeist als Federspeicher-Bremse ausgebildet. Die Zylinder einer vorgespannten Federspeicher-Bremse aktuieren eine Bremsbetätigungsstellung, wenn kein oder kein ausreichender Luftdruck vorliegt. Dadurch ist stets gewährleistet, dass das Nutzfahrzeug selbst im Fehlerfall bei Energieausfall oder Energieabfall durch die vorgespannten Federspeicheraktuatoren grundsätzlich festgebremst ist.

Die DE 601 23 010 T2 beschreibt eine Radnabe inclusive integriertem Planetengetriebe sowie nasslaufender Lamellenbremse ohne Sensorintegration zur Applikation bei einem schweren Nutzfahrzeug, nämlich insbesondere für einen Bagger oder dergleichen, und beinhaltet die Merkmale laut Oberbegriff des Patentanspruchs 1. Die EP 3 418 135 A1 beschreibt in abstahierter, übergeordneter Form ein elektronisches Regelungskonzept für eine synchronisierte Regelung mehrerer Brake Packs eines Luftfahrzeugs, ohne dass darin eine Lamellenradbremse oder Sensorlamellenintegration nach dem Vorbild der vorliegenden Erfindung konkretisiert wäre.

Die vorliegende Erfindung bezieht sich in Weiterentwicklung des Standes der Technik auf die Aufgabe, eine besonders feinfühlig dosiert regulierbare Lamellenbremse breitzustellen, welche im Vergleich zu bekannten Schwerlast-Lamellenbremsen von Nutzfahrzeugen derart weiterentwickelt ist, so dass diese beispielsweise im Hinblick auf eine komfortable Überwachung und/oder Steuerung bzw. Regelung der Lamellenbremse mithin zum Einsatz für leichte Personenkraftfahrzeuge oder sogenannte People-Mover als Betriebs- und/oder Festellbremse einsetzbar ist, so dass die Lamellenbremse zielgerichtet zwecks Kooperation in einen modernen, und ggf. rekuperativ arbeitenden PKW-Antriebsstrang implementierbar ist.

Die vorliegende Aufgabe wird erfindungsgemäß durch eine neuartige Lamellenbremse in Merkmalskombination anhand der kennzeichnenden Merkmale gemäß Anspruch 1 gelöst, indem ein neuartiges Sensormittel integriert ist, so dass der erfindungsgemäßen Lamellenbremse in der Folge eine besonders präzise Soll-Istwert-Regelung ermöglicht ist. Vorteilhafte Ausgestaltungen der Erfindung werden durch die Unteransprüche angegeben. Der offenbarte Inhalt der gesamten Anmeldeunterlage einschließlich der Ansprüche wird durch ausdrückliche Inbezugnahme zum Gegenstand dieser Beschreibung gemacht.

Die Erfindung betrifft eine in einem elektronisch vernetzt geregelten Fahrzeugsystem elektrisch und/oder elektronisch durch eine elektronische Steuereinheit ECU steuerbare bzw. regelbare und per Bussystem vernetzt arrangierte Lamellenbremse inclusive Sensorik für ein drehbares Element. Dabei ist das genannte elektronische Fahrzeugsystem dazu geeignet und bestimmt, gewissermaßen übergeordnet sowohl Antriebsstrangfunktionen einer elektronischen Antriebsstrangregelung unter priorisierter Berücksichtigung der Fahrsicherheitsfunktionen einer elektronische Fahrdynamikregelung bzw. Bremsenregelung mit den rekuperativ gelagerten Rationalisierungsfunktionen und Effizienzfunktionen angemessen miteinander zu vernetzen. Die entsprechend rekuperativ übergeordnet arrangiert vernetzte Lamellenbremse verfügt zu diesem Zweck über geeignete elektronisch-fremdansteuerbare Betätigungsaktuatorik und es liegen gesondert voneinander zumindest mechanische und elektrische Komponentenschnittstellen vor, wobei diese oft als gesonderte Komponentenschnittstellen vorliegen, die eine oder mehrere elektrische Sensorschnittstellen umfassen.

Die elektrisch vernetzte Lamellenbremse weist eine Grundstruktur auf, die als drehfest gelagerter Stator fungiert. Der Stator ist bei einer bevorzugten Ausführungsform der Erfindung mit einer oder mehreren mechanischen Schnittstellen an einem Fahrzeugbauteil wie insbesondere an einer Antriebsstrangkomponente, einer Fahrgestellkomponente, an einer Chassisbauteilkomponente oder an einem Fahrzeugrahmen austauschbar, also lösbar, fixiert. Eine solche Stator-Grundstruktur kann beispielhaft als gesondert oder integriert an einem Motor- oder Getriebegehäuse angefügtes Gehäuseteil der Lamellenbremse sein, das demzufolge als eine statische Referenz bzw. Widerlager in Bezug auf Relativbewegung, wie beispielsweise abzubremsende Drehbewegung und/oder axiale Verschiebungen eines drehbaren Elementes darstellt.

Die elektrisch vernetzte Lamellenbremse weist eine Anzahl von Hauptlamellen auf, welche mit dem drehbaren Element drehfest verbunden und relativ zur Grundstruktur drehbar sind. Damit kann eine Drehbewegung zwischen dem drehbaren Element und den Hauptlamellen übertragen werden, wodurch sich beispielsweise eine Drehbewegung des drehbaren Elements auf die Hauptlamellen überträgt oder eine Bremswirkung, welche auf die Hauptlamellen wirkt, auf das drehbare Element übertragen wird.

Bei dem drehbaren Element kann es sich insbesondere um eine Welle handeln, welche im Rahmen eines Antriebssystems verwendet wird. Das drehbare Element ist relativ zur Grundstruktur drehbar.

Die Lamellenbremse weist eine Anzahl von Zwischenlamellen auf, welche zwischen den Hauptlamellen jeweils fest oder begrenzt drehbar an der Grundstruktur gelagert sind. Dies bedeutet insbesondere, dass sich die jeweiligen Zwischenlamellen im Vergleich zur Grundstruktur gar nicht oder eben nur begrenzt drehen können. Dadurch können sie bei entsprechender Reibung mit den Hauptlamellen eine Bremswirkung auf die Hauptlamellen ausüben. Auch im Fall einer festen oder begrenzt drehbaren Lagerung ist typischerweise eine axiale Verschiebbarkeit vorgesehen, um die Bremswirkung zu ermöglichen.

Die im elektrischen Fahrzeugsystem vernetzt arrangierte Lamellenbremse weist ein Betätigungselement auf, welches dazu konfiguriert ist, zur Betätigung der Lamellenbremse die Hauptlamellen gegen die Zwischenlamellen zu drücken. Dabei kann es sich insbesondere um ein elektrisches oder elektromagnetisches Betätigungselement handeln, wobei durch Bestromung eines Elektromagneten beispielsweise eine entsprechende Wirkung erreicht werden kann.

Die Lamellenbremse weist zumindest eine Rückstelleinrichtung auf, welche dazu konfiguriert ist, zumindest eine Sensorlamelle der begrenzt drehbar gelagerten Zwischenlamellen bezüglich ihrer Drehbewegung in eine Ruhelage relativ zur Grundstruktur vorzuspannen. Die Rückstelleinrichtung kann dabei beispielsweise nur auf eine der Zwischenlamellen oder auf eine Mehrzahl von Zwischenlamellen wirken. Die entsprechend mit einer Rückstelleinrichtung versehenen Zwischenlamellen werden dabei typischerweise als Sensorlamellen bezeichnet, da sie eine Sensorfunktion ausüben können, wie dies weiter unten beschrieben werden wird.

Die Lamellenbremse weist ferner einen Sensor auf, welcher dazu ausgebildet ist, eine Verdrehung der Sensorlamelle aus ihrer Ruhelage zu detektieren. Zwecks passender elektronischer Integration, wie insbesondere zwecks Vernetzung mit dem elektronischen Fahrzeugsystem, wie insbesondere zur Adressierung in dem Fahrzeugdatenbussystem, ist dem genannten Sensor eine elektronische Sensorschnittstelle zugewiesen.

Durch die erfindungsgemäße Lamellenbremse ist es möglich, eine durch die Lamellenbremse auf das drehbare Element aufgewendete Bremskraft mittels des Sensors zu erfassen und zu quantifizieren. Dies erlaubt eine vorteilhafte Überwachung der Bremswirkung.

Durch die Rückstelleinrichtung kann insbesondere eine Kraft auf die Sensorlamelle ausgeübt werden, welche von der Verdrehung der jeweiligen Sensorlamelle relativ zur Grundstruktur abhängt. Dadurch kann aus einer Verdrehung der Sensorlamelle aus der jeweiligen Ruhelage heraus auf die wirkende Kraft geschlossen werden.

Gemäß einer bevorzugten Ausführung ist die Rückstelleinrichtung als Federelement ausgebildet. Dies entspricht einer einfachen und praktikablen Ausführung.

Die Rückstelleinrichtung kann fest mit der Sensorlamelle verbunden sein. Sie kann jedoch auch fest mit der Grundstruktur verbunden sein.

Die Sensorlamelle kann insbesondere über einen Zeiger mit dem Sensor verbunden sein, wobei der Zeiger von der Sensorlamelle absteht. Dadurch kann eine gewisse Entkopplung zwischen Sensorlamelle und Sensor erreicht werden, wodurch beispielsweise ein axiales Spiel vorgesehen werden kann.

Der Zeiger kann fest oder radial verschiebbar mit der Sensorlamelle verbunden sein. Durch eine radiale Verschiebbarkeit kann ebenfalls ein gewisses Spiel vorgesehen werden, wodurch der Betrieb vereinfacht und auf eventuelle Veränderungen in einfacher Weise reagiert werden kann.

Der Zeiger kann insbesondere thermisch isolierend ausgebildet sein. Dadurch wird eine thermische Entkopplung erreicht.

Der Sensor kann ein radial formstabiles, tangential elastisches Element aufweisen, in welches der Zeiger eingreift. Ein solches radial formstabiles, tangential elastisches Element hat sich zur einfachen und zuverlässigen Realisierung eines Sensors als vorteilhaft erwiesen.

Das elastische Element kann insbesondere ein Faltenbalg sein.

Der Sensor kann ein lediglich tangential verschiebbar gelagertes Element aufweisen, in welches der Zeiger eingreift. Auch damit kann eine vorteilhafte Ausführung eines Sensors realisiert werden. Das tangential verschiebbar gelagerte Element kann mittels eines elastischen Dichtmittels mit der Grundstruktur verbunden sein. Damit kann ein Eindringen von Feuchtigkeit oder Verschmutzungen in die Lamellenbremse vermieden werden.

Der Zeiger kann in dem tangential elastischen Element oder in dem tangential verschiebbar gelagerten Element axial verschiebbar sein oder axiales Spiel aufweisen. Dadurch kann eine axiale Verschiebung der jeweiligen Sensorlamelle, welche zum Erreichen einer Bremswirkung typischerweise erforderlich ist, ohne Konsequenzen für den Sensor ermöglicht werden.

Die Rückstelleinrichtung kann fest mit der Grundstruktur verbunden sein und als Teil des Sensors ausgebildet sein. Dabei kann die Rückstelleinheit insbesondere als Federelement ausgebildet sein. Beispielsweise kann dabei ein Magnet auf dem Federelement befestigt sein, wobei dieser typischerweise nicht auf der jeweiligen Sensorlamelle befestigt ist. Dadurch kann eine Relativbewegung zwischen dem Magneten und beispielsweise einer Magnetsensoranordnung gemessen werden. Das Federelement kann beispielsweise ähnlich einem Biegebalken oder einer Blattfeder ausgeführt sein. Eine Relativbewegung zwischen Sensorlamelle und Grundstruktur ist typischerweise vorgesehen, um eine axiale Beweglichkeit der Sensorlamelle ohne Verklemmen zu ermöglichen. Das hierfür erforderliche Spiel ist toleranzabhängig. Bei der eben beschriebenen Anordnung ist das Sensorsignal typischerweise unabhängig von diesem Spiel, führt also nicht zu einem Offsetfehler.

Der Sensor kann beispielsweise eine Magnetdetektoranordnung aufweisen, um eine Verformung des tangential elastischen Elements oder eine Verschiebung des tangential verschiebbar gelagerten Elements oder eine Verformung der Rückstelleinrichtung zu detektieren. Mittels einer solchen Magnetdetektoranordnung kann eine Verdrehung der jeweiligen Sensorlamelle um ihre Ruhelage, welche anzeigend für die wirkende Kraft ist, in vorteilhafter Weise gemessen werden.

Die Magnetdetektoranordnung kann insbesondere eine Detektionsvorrichtung basierend auf dem anisotropen magnetoresistiven Effekt, AMR, sein oder aufweisen. Dies hat sich für typische Anwendungen als vorteilhaft herausgestellt.

Bei dem drehbaren Element kann es sich insbesondere um eine Welle handeln, beispielsweise eine typische Antriebswelle, welche in einem Antriebsstrang verwendet wird, oder auch um eine Radwelle, auf welcher unmittelbar ein Rad eines Kraftfahrzeugs montiert ist. Die Bremswirkung wirkt dabei typischerweise auf das jeweilige drehbare Element. Das drehbare Element kann ein Bestandteil der Lamellenbremse sein, kann jedoch auch als extern dazu betrachtet werden.

Durch die hierin beschriebene Ausführung kann insbesondere eine Sensierung eines Bremsmoments über eine Zwischenscheibe bzw. Sensorscheibe, insbesondere ohne Belagmaterial, erfolgen, welche beispielsweise in tangentialer Bewegungsrichtung in einem bestimmten Teilbereich eine gewisse Nachgiebigkeit aufzeigt und somit bei dem Bremsvorgang einen messbaren Weg generiert.

Weitere Merkmale und Vorteile wird der Fachmann den nachfolgend mit Bezug auf die beigefügte Zeichnung beschriebenen Ausführungsbeispielen entnehmen. Dabei zeigen:
- Fig. 1:: einen Ausschnitt aus einer Lamellenbremse,
- Fig. 2:: einen weiteren Ausschnitt aus einer Lamellenbremse,
- Fig. 3:: eine Detailansicht.

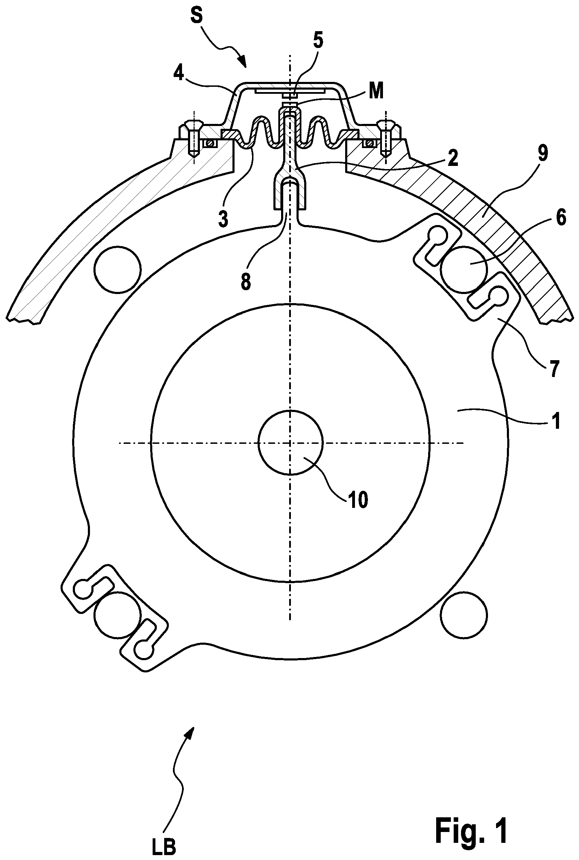

Fig. 1 zeigt einen Ausschnitt aus einer Lamellenbremse LB gemäß einem Ausführungsbeispiel der Erfindung.

Dabei ist eine Zwischenlamelle 1 eingezeichnet, welche vorliegend als Sensorlamelle ausgebildet ist. Die Zwischenlamelle 1 ist relativ zu einer Grundstruktur 9, welche ein Gehäuse der Lamellenbremse LB darstellt, begrenzt drehbar gelagert.

Die Lamellenbremse LB weist ein drehbares Element 10 in Form einer Welle auf. Das drehbare Element 10 ist mit nicht dargestellten Hauptlamellen drehfest verbunden. Dadurch kann eine Bremswirkung auf das drehbare Element 10 erzielt werden, indem die Hauptlamellen gegen die Sensorlamelle 1 oder andere Zwischenlamellen gedrückt werden.

Die Lamellenbremse LB weist eine Anzahl von Stäben 6 auf, welche fest mit der Grundstruktur 9 verbunden sind. Sie weist ferner Federelemente 7 auf, welche fest mit der Sensorlamelle 1 verbunden sind und wie gezeigt an einem jeweiligen Stab 6 anliegen. Dadurch ist die Zwischenlamelle 1 relativ zur Grundstruktur 9 begrenzt drehbar gelagert, wobei die Federelemente 7 für eine rückstellende Kraft in eine Ruhelage sorgen. Sie dienen somit als Rückstelleinrichtung.

Am Außenumfang der Zwischenlamelle 1 ist ein Vorsprung 8 angeordnet, auf welchem ein Zeiger 2 angebracht ist. Dieser Zeiger 2 kann auch als Finger bezeichnet werden. Er ist wie gezeigt auf dem Vorsprung 8 radial verschiebbar. Dadurch können Temperaturspitzen und entsprechende radiale Ausdehnungen entkoppelt werden. In einer alternativen Ausführung könnte der Zeiger 2 auch einteilig in die Zwischenlamelle 1 integriert sein. Der Zeiger 2 überträgt eine tangentiale Bewegung der Zwischenlamelle 1 an einen Sensor S der Lamellenbremse LB, welcher nachfolgend näher beschrieben werden wird.

Der Zeiger 2 kann auch als Isolationselement ausgeführt sein.

Der Sensor S weist einen Faltenbalg 3 auf, welcher vorliegend als radial formstabiles, tangential elastisches Element ausgebildet ist. In diesen Faltenbalg 3 greift der Zeiger 2 ein und überträgt somit eine tangentiale Bewegung von der Sensorlamelle 1 an den Faltenbalg 3. Auf dem in radialer Richtung formstabilen Faltenbalg 3 befindet sich ein Magnet M, welcher sich somit mit dem Faltenbalg 3 bei Bewegung des Zeigers 2 bewegt.

Der Sensor S weist ferner eine Magnetdetektoranordnung 5 auf, welche auf dem anisotropen magnetoresistiven Effekt basiert. Die Magnetdetektoranordnung 5 ist dabei vorliegend in einem Deckel 4 des Sensors S auf einer Innenseite angeordnet. Typischerweise wird dabei ein Luftspalt zwischen Magnetdetektoranordnung 5 und Magnet M zumindest weitgehend gleich erhalten. Mittels der Magnetdetektoranordnung 5 kann somit eine Verschiebung des Magneten M, welche auf einer Verdrehung der Sensorlamelle 1 aus ihrer Ruhelage basiert, erkannt und gemessen werden.

Auf diese Weise kann im Sensor S eine Relativbewegung bei einem an der Zwischenlamelle 1 anliegenden Moment detektiert werden. Dies erlaubt einen Rückschluss auf die wirkende Bremskraft.

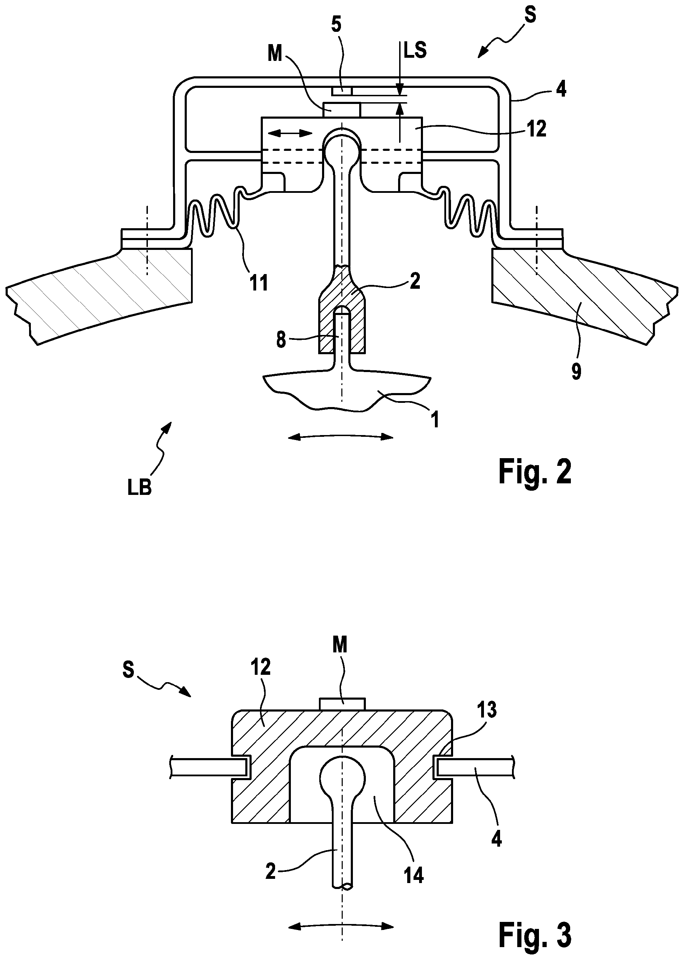

Fig. 2 zeigt einen Ausschnitt aus einer Lamellenbremse LB gemäß einem zweiten Ausführungsbeispiel. Dabei ist der Sensor S alternativ ausgeführt.

Der Magnet M befindet sich dabei auf einem Schieber 12, welcher im Deckel 4 nur linear, nämlich tangential verschiebbar gelagert ist. Dies entspricht einer Schubladenführung. Zur Abdichtung ist zwischen Schieber 12 und Gehäuse 9 ein flexibles Elastomerelement als Dichtmittel 11 vorgesehen. Es erfüllt jedoch in diesem Fall keine Positionsanforderungen für den gleichbleibenden axialen Abstand der magnetischen Elemente. Ein eingezeichneter Luftspalt LS ist hier vielmehr durch eine Führung des Schiebers 12 im Deckel 4 wie gezeigt sichergestellt.

Fig. 3 zeigt einen vergrößerten Ausschnitt einer möglichen Ausführung eines Teils des Sensors S. Dieser kann beispielsweise bei der Ausführung nach Fig. 2 verwendet werden.

Der Schieber 12, welcher auch als Gleitstück bezeichnet werden kann, weist eine Bohrung 13 auf, durch welche ein stabförmiger Teil des Deckels 4 hindurchgeht. Dadurch ist eine lineare Führung sichergestellt.

Zwischen dem Schieber 12 und dem Zeiger 2 ist eine Freimachung 14 vorgesehen, wodurch insbesondere einer axialen Verschiebung der Zwischenlamelle 1 Rechnung getragen werden kann. Dadurch werden Zuverlässigkeit und Lebensdauer weiter erhöht.

Eine gewollte Nachgiebigkeit in tangentialer Richtung der Zwischenlamelle 1 kann beispielsweise alternativ auch über separate Federelemente, beispielsweise kombiniert mit einem Lamellen- bzw. Bolzenbauteil, realisiert werden.

Es sei erwähnt, dass ein Federelement grundsätzlich beliebig geformt sein kann und an der Zwischenlamelle 1, wie gezeigt, oder alternativ auch an einem anderen Element wie beispielsweise an einem der Stäbe 6 oder an der Grundstruktur 9 angebracht sein kann. Der Zeiger 2 kann vorteilhaft aus einem wärmeisolierenden Material ausgebildet sein. Dadurch kann eine thermische Entkopplung erreicht werden. Die Zwischenlamelle 1 kann auch aus unterschiedlichen Materialien ausgebildet sein.

Alternativ kann der Faltenbalg 3 auch andere federnde kapselnde Konturen aufweisen. Alternativ zur Magnetdetektoranordnung 5, welche auf dem anisotropen magnetoresistiven Effekt basiert, können auch andere Positionssensoren eingesetzt werden.

Die Zwischenlamelle 1, welche als Sensorlamelle ausgebildet ist, kann in einem Lamellenpaket der Lamellenbremse LB an einer beliebigen Position verbaut werden. Es können auch mehrere solche Zwischenlamellen 1 als entsprechende Sensorlamellen ausgebildet sein.

Über ein Gleitelement in einer Führung kann ein gleichbleibender Luftspalt LS des Sensors S erreicht werden. Axiale Bewegungen der Zwischenlamelle 1 können bei Verschleiß durch entsprechende Ausnehmungen im Schieber 12 kompensiert werden, ohne dass dies Einfluss auf die Messung hat. Insgesamt wird durch die beschriebene Ausführung ein preiswerter und präziser Sensor mit wenig Bauraumbedarf bereitgestellt. Der Sensor S kann dabei insbesondere wie gezeigt gekapselt sein, was eine besonders hohe Zuverlässigkeit ermöglicht.

### Bezugszeichenliste:

- LB:: Lamellenbremse
- M:: Magnet
- 1:: Sensorlamelle, Zwischenlamelle
- 2:: Zeiger
- 3:: Faltenbalg
- 4:: Deckel
- 5:: Magnetdetektoranordnung
- 6:: Stab
- 7:: Federelement
- 8:: Vorsprung
- 9:: Stator/Grundstruktur
- 10:: drehbares Element
- 11:: Dichtmittel
- 12:: Schieber
- 13:: Bohrung
- 14:: Freimachung

## Patentansprüche

1. Lamellenbremse (LB) für ein drehbares Element (10), aufweisend
- ein Stator (9),
- eine Anzahl von Hauptlamellen, welche mit dem drehbaren Element (10) drehfest verbunden und relativ zum Stator (9) drehbar sind,
- eine Anzahl von Zwischenlamellen, welche zwischen den Hauptlamellen jeweils fest oder begrenzt drehbar an dem Stator (9) gelagert sind,
- ein Betätigungselement, welches dazu konfiguriert ist, zur Betätigung der Lamellenbremse (LB) die Hauptlamellen gegen die Zwischenlamellen zu drücken, **gekennzeichnet durch**
- eine Rückstelleinrichtung (7), welche dazu konfiguriert ist, zumindest eine Sensorlamelle (1) der begrenzt drehbar gelagerten Zwischenlamellen bezüglich ihrer Drehbewegung in eine Ruhelage relativ zum Stator (9) vorzuspannen, und
- einen Sensor (S), welcher dazu ausgebildet ist, eine Verdrehung der Sensorlamelle (1) aus ihrer Ruhelage zu detektieren.

2. Lamellenbremse (LB) nach Anspruch 1,
- wobei die Rückstelleinrichtung (7) als Federelement ausgebildet ist.

3. Lamellenbremse (LB) nach einem oder mehreren der vorhergehenden Ansprüche,
- wobei die Rückstelleinrichtung (7) fest mit der Sensorlamelle (1) verbunden ist, oder
- wobei die Rückstelleinrichtung (7) fest mit dem Stator (9) verbunden ist.

4. Lamellenbremse (LB) nach einem oder mehreren der vorhergehenden Ansprüche,
- wobei die Sensorlamelle (1) über einen Zeiger (2) mit dem Sensor (S) verbunden ist, wobei der Zeiger (2) von der Sensorlamelle (1) absteht.

5. Lamellenbremse (LB) nach Anspruch 4,
- wobei der Zeiger (2) fest oder radial verschiebbar mit der Sensorlamelle (1) verbunden ist.

6. Lamellenbremse (LB) nach einem oder mehreren der Ansprüche 4 oder 5,
- wobei der Zeiger (2) thermisch isolierend ausgebildet ist.

7. Lamellenbremse (LB) nach einem oder mehreren der Ansprüche 4 bis 6,
- wobei der Sensor (S) ein radial formstabiles, tangential elastisches Element (3) aufweist, in welches der Zeiger (2) eingreift.

8. Lamellenbremse (LB) nach Anspruch 7,
- wobei das elastische Element (3) ein Faltenbalg ist.

9. Lamellenbremse (LB) nach einem oder mehreren der Ansprüche 4 bis 6,
- wobei der Sensor (S) ein lediglich tangential verschiebbar gelagertes Element (12) aufweist, in welches der Zeiger (2) eingreift.

10. Lamellenbremse (LB) nach Anspruch 9,
- wobei das tangential verschiebbar gelagerte Element (12) mittels eines elastischen Dichtmittels (11) mit dem Stator (9) verbunden ist.

11. Lamellenbremse (LB) nach einem oder mehreren der Ansprüche 7 bis 10,
- wobei der Zeiger (2) in dem tangential elastischen Element (3) oder in dem tangential verschiebbar gelagerten Element (12) axial verschiebbar ist oder axiales Spiel aufweist.

12. Lamellenbremse (LB) nach einem oder mehreren der Ansprüche 1 bis 3,
- wobei die Rückstelleinrichtung (7) fest mit dem Stator (9) verbunden ist und als Teil des Sensors (S) ausgebildet ist.

13. Lamellenbremse (LB) nach einem oder mehreren der Ansprüche 7 bis 12,
- wobei der Sensor (S) eine Magnetdetektoranordnung (5) aufweist, um eine Verformung des tangential elastischen Elements (3) oder eine Verschiebung des tangential verschiebbar gelagerten Elements (12) oder eine Verformung der Rückstelleinrichtung (7) zu detektieren.

14. Lamellenbremse (LB) nach Anspruch 13,
- wobei die Magnetdetektoranordnung (5) eine Detektionsvorrichtung basierend auf dem Anisotropen Magnetoresistiven Effekt, AMR, ist oder aufweist.

15. Lamellenbremse (LB) nach einem oder mehreren der vorhergehenden Ansprüche,
- welche eine Welle als drehbares Element (10) aufweist.

16. Lamellenbremse (LB) nach einem oder mehreren der vorhergehenden Ansprüche,
- **dadurch gekennzeichnet, dass** die Lamellenbremse (LB) mit einem elektronischen Fahrzeugsystem umfassend wenigstens eine elektronische Steuereinheit (ECU) vernetzt vorgesehen ist, indem eine elektronische Integration mit mindestens einer elektronischen Verbindung zwischen Lamellenbremse (LB) und ECU vorliegt, so dass eine elektronische Fahrzeugantriebsstrangregelung und eine elektronische Bremssystemregelung inclusive Rekuperation mit Hilfe von der überlagerten elektronischen Steuereinheit (ECU) ermöglicht ist.

17. Lamellenbremse (LB) nach einem oder mehreren der vorhergehenden Ansprüche, **dadurch gekennzeichnet, dass** der Lamellenbremse (LB) zur elektronischen Integration, wie insbesondere zwecks Vernetzung mit dem elektronischen Fahrzeugsystem, wenigstens eine elektronische Sensorschnittstelle zugewiesen ist.

## Claims

1. Multiple disk brake (LB) for a rotatable element (10), having
- a stator (9),
- a number of primary disks, which are connected to the rotatable element (10) for conjoint rotation and are rotatable relative to the stator (9),
- a number of intermediate disks, which are each mounted on the stator (9) between the primary disks fixedly or rotatably to a limited extent,
- an application element, which is configured to press the primary disks against the intermediate disks in order to apply the multiple disk brake (LB),
**characterized by**
- a restoring unit (7), which is configured to prestress at least one sensor disk (1) of the intermediate disks mounted rotatably to a limited extent in respect of its rotary movement into an idle position relative to the stator (9), and
- a sensor (S), which is designed to detect a rotation of the sensor disk (1) from its idle position.

2. Multiple disk brake (LB) according to Claim 1,
- wherein the restoring unit (7) is designed as a spring element.

3. Multiple disk brake (LB) according to one or more of the preceding claims,
- wherein the restoring unit (7) is fixedly connected to the sensor disk (1), or
- wherein the restoring unit (7) is fixedly connected to the stator (9).

4. Multiple disk brake (LB) according to one or more of the preceding claims,
- wherein the sensor disk (1) is connected to the sensor (S) by means of a pointer (2), wherein the pointer (2) protrudes from the sensor disk (1).

5. Multiple disk brake (LB) according to Claim 4,
- wherein the pointer (2) is connected to the sensor disk (1) fixedly or so as to be displaceable in a radial direction.

6. Multiple disk brake (LB) according to one or more of Claims 4 or 5,
- wherein the pointer (2) is designed to be thermally insulating.

7. Multiple disk brake (LB) according to one or more of Claims 4 to 6,
- wherein the sensor (S) has a radially dimensionally stable, tangentially elastic element (3), in which the pointer (2) engages.

8. Multiple disk brake (LB) according to Claim 7,
- wherein the elastic element (3) is a corrugated bellows.

9. Multiple disk brake (LB) according to one or more of Claims 4 to 6,
- wherein the sensor (S) has a merely tangentially displaceably mounted element (12), in which the pointer (2) engages.

10. Multiple disk brake (LB) according to Claim 9,
- wherein the tangentially displaceably mounted element (12) is connected to the stator (9) by means of an elastic sealing means (11).

11. Multiple disk brake (LB) according to one or more of Claims 7 to 10,
- wherein the pointer (2) is axially displaceable or has axial play in the tangentially elastic element (3) or in the tangentially displaceably mounted element (12).

12. Multiple disk brake (LB) according to one or more of Claims 1 to 3,
- wherein the restoring unit (7) is fixedly connected to the stator (9) and is designed as part of the sensor (S).

13. Multiple disk brake (LB) according to one or more of Claims 7 to 12,
- wherein the sensor (S) has a magnet detector arrangement (5) in order to detect a deformation of the tangentially elastic element (3) or a displacement of the tangentially displaceably mounted element (12) or a deformation of the restoring unit (7).

14. Multiple disk brake (LB) according to Claim 13,
- wherein the magnet detector arrangement (5) is or has a detection device based on the anisotropic magnetoresistive effect, AMR.

15. Multiple disk brake (LB) according to one or more of the preceding claims,
- which has a shaft as rotatable element (10).

16. Multiple disk brake (LB) according to one or more of the preceding claims,
- **characterized in that** the multiple disk brake (LB) is provided interconnected with an electronic vehicle system comprising at least one electronic control unit (ECU), since an electronic integration with at least one electronic connection between the multiple disk brake (LB) and ECU is present, so that an electronic vehicle drivetrain control and an electronic brake system control inclusive of recuperation is made possible with the aid of the superordinate electronic control unit (ECU).

17. Multiple disk brake (LB) according to one or more of the preceding claims, **characterized in that** the multiple disk brake (LB) is assigned at least one electronic sensor interface for electronic integration, such as, in particular, for the purpose of interconnection with the electronic vehicle system.

## Revendications

1. Frein à disques multiples (LB) destiné à un élément rotatif (10), ledit frein à disque comportant
- un stator (9),
- un certain nombre de disques principaux qui sont reliés solidairement en rotation à l'élément rotatif (10) et qui peuvent tourner par rapport au stator (9),
- un certain nombre disques intermédiaires qui sont montés chacun de manière fixe ou avec une rotation limitée sur le stator (9) entre les disques principaux,
- un élément d'actionnement qui est conçu pour presser les disques principaux contre les disques intermédiaires afin d'actionner le frein à disques multiples (LB), **caractérisé par**
- un module de rappel (7) qui est conçu pour précontraindre au moins un disque capteur (1), parmi les disques intermédiaires qui sont montés de manière limitée en rotation, quant à son mouvement de rotation dans une position de repos par rapport au stator (9), et
- un capteur (S) qui est conçu pour détecter une rotation du disque capteur (1) par rapport à sa position de repos.

2. Frein à disques multiples (LB) selon la revendication 1,
- le module de rappel (7) étant conçu comme un élément à ressort.

3. Frein à disques multiples (LB) selon une ou plusieurs des revendications précédentes,
- le module de rappel (7) étant relié de manière fixe au disque capteur (1), ou
- le module de rappel (7) étant relié de manière fixe au stator (9).

4. Frein à disques multiples (LB) selon une ou plusieurs des revendications précédentes,
- le disque capteur (1) étant relié au capteur (S) par le biais d'un pointeur (2), le pointeur (2) dépassant du disque capteur (1).

5. Frein à disques multiples (LB) selon la revendication 4,
- le pointeur (2) étant relié au disque capteur (1) de manière fixe ou déplaçable radialement.

6. Frein à disques multiples (LB) selon une ou plusieurs des revendications 4 ou 5,
- le pointeur (2) étant conçu pour être thermiquement isolant.

7. Frein à disques multiples (LB) selon une ou plusieurs des revendications 4 à 6,
- le capteur (S) comportant un élément (3) tangentiellement élastique et de forme radialement stable dans lequel s'engage le pointeur (2).

8. Frein à disques multiples (LB) selon la revendication 7,
- l'élément élastique (3) étant un soufflet.

9. Frein à disque multiples (LB) selon une ou plusieurs des revendications 4 à 6,
- le capteur (S) comportant un élément (12) qui est monté de manière à ne pouvoir se déplacer que tangentiellement et dans lequel s'engage le pointeur (2).

10. Frein à disques multiples (LB) selon la revendication 9,
- l'élément (12), monté de manière déplaçable tangentiellement, étant relié au stator (9) à l'aide d'un moyen d'étanchéité élastique (11).

11. Frein à disques multiples (LB) selon une ou plusieurs des revendications 7 à 10,
- le pointeur (2) étant déplaçable axialement, ou présentant un jeu axial, dans l'élément tangentiellement élastique (3) ou dans l'élément (12) monté de manière déplaçable tangentiellement.

12. Frein à disques multiples (LB) selon une ou plusieurs des revendications 1 à 3,
- le module de rappel (7) étant relié de manière fixe au stator (9) et étant conçu comme une partie du capteur (S).

13. Frein à disques multiples (LB) selon une ou plusieurs des revendications 7 à 12,
- le capteur (S) présentant un ensemble formant détecteur magnétique (5) destiné à détecter une déformation de l'élément tangentiellement élastique (3) ou un déplacement de l'élément (12) monté de manière déplaçable tangentiellement ou une déformation du module de rappel (7).

14. Frein à disques multiples (LB) selon la revendication 13,
- l'ensemble formant détecteur magnétique (5) étant ou comportant un dispositif de détection basé sur l'effet magnéto-résistif anisotrope AMR.

15. Frein à disques multiples (LB) selon une ou plusieurs des revendications précédentes,
- lequel comporte un arbre comme élément rotatif (10).

16. Frein à disques multiples (LB) selon une ou plusieurs des revendications précédentes,
- **caractérisé en ce que** le frein à disques multiples (LB) est prévu en réseau avec un système de véhicule électronique comprenant au moins une unité de commande électronique (ECU), du fait qu'une intégration électronique est présente avec au moins une liaison électronique entre le frein à disques multiples (LB) et ECU de façon à permettre une régulation électronique de la chaîne cinématique du véhicule et une régulation électronique du système de freinage incluant la récupération à l'aide de l'unité de commande électronique (ECU) de niveau supérieur.

17. Frein à disques multiples (LB) selon une ou plusieurs des revendications précédentes, **caractérisé en ce que** le frein à disques multiples (LB) est associé à au moins une interface de capteur électronique afin d'effectuer l'intégration électronique, comme notamment afin d'être mis en réseau avec le système électronique du véhicule.
